# EUROPEAN PATENT SPECIFICATION

(11) **EP 1 426 519 B1**
(45) Date of publication and mention of the grant of the patent: **05.07.2006**
(21) Application number: 03078817.8
(22) Date of filing: 02.12.2003
(51) Int. Cl.: E04D 13/14, E04D 13/147, B32B 15/08

(54) **Sealing material, particularly for buildings**
Dichtmaterial, insbesondere für Gebäude
Matériau d'étanchéité, en particulier pour bâtiments

(30) Priority: 03.12.2002 NL 1022070
(43) Date of publication of application: 09.06.2004
(73) Proprietor: Ubbink B.V., 6984 AA Doesburg (NL)
(72) Inventor: Ravestein, Frans Gerrit, 3931 EL Woudenberg (NL)
(74) Representative: Ferguson, Alexander

(56) References cited:
- WO-A-99/13180
- NL-C- 1 009 983
- US-A- 4 887 368
- US-A- 6 035 582

## Description

The invention relates to a laminate, more or less sheet-shaped, for sealing purposes, particularly at the location of transitions in roof-coverings and outer walls of buildings, according to the preamble of claim 1. Such a laminate is known from WO 99/13180.

Previously lead or counter flashings were used for sealing against wind and water of transitions in roof-coverings at the location of connections of roof-covering parts, such as tiles, to solitary bodies, such as dormer windows, chimneys, skylights et cetera. Lead flashings were also used in outer walls, for instance above casings.

The use of lead flashings, however, is expensive and difficult to execute. Lead flashings cannot be supplied in larger lengths, such as for instance 2-3 metres, due to the risk of crack formation. Lead flashings furthermore have the drawback that due to washing out lead particles end up in surface water or waste water. Furthermore they cause streaks on roofs and/or outer walls.

For quite some time so-called lead substitutes have been looked for. A suggestion for a lead substitute is described in German Utility Model 85.35678.1, in which a composite sheet is shown which comprises a wire gauze-like layer embedded in a bitumen-like material. Said composite sheet, however, is expensive to manufacture.

In Dutch patent 194404 a composite material is suggested comprising a wire gauze-like layer embedded in a synthetic material, the meshes being tilted.

In Dutch patent application 1009983 it is suggested to use a laminate of an aluminium layer as a sealing material which laminate is coated with a layer of thermoplastic synthetic material on either side. In practice this laminate appears to be easily deformable, but it still has such elastic properties, that after bringing it in the wanted shape - in order to for instance join to undulatory tile surfaces - it is able to spring back. Thus the sealing action is deteriorated.

In US patent specification 6.035.582 a flashing for buildings is described, in one embodiment provided with two metal layers, of copper and aluminium, in between which a foamed layer having closed cells is situated, which foamed layer may for instance be polythene, polypropene or PVC. The various layers can be connected to each other by means of so-called flame-lamination. A problem may here be that when bending, the material shearing forces occurring along the boundary surfaces may cause cracking in the cellular foam material. The foam material furthermore easily allows elastic movement of the metal layers with respect to each other.

An object of the invention is to improve on at least some of these points.

A further object is to provide a laminate for sealing roof surfaces, which is relatively tough but is indeed manually plastically deformable.

Another object of the invention is to provide a laminate of the type described in the preamble, that is easy to manufacture at low costs, using standard materials.

From one aspect the invention provides a laminate according to claim 1.

In this way it is easily achieved that both metal layers during -plastic-deformation from a flat condition behave as one unity and -as a result of the larger static moment- are tougher to deform and thus also after plastic deformation offer more resistance against deforming back. The metal layers are reliably spaced apart from each other and due to their position spaced apart from the neutral line will as a whole be quickly brought past the yield point. The first layer, during use the more outward layer, is protected from external influences such as moisture and heat and against mechanical damages. Moreover the fourth layer offers a pleasant and reliable engagement surface during manually deforming the laminate. During deformation with tools of impact sound is muffled, which increases the sense of lead. By the fifth layer, improved connection to the underlying structures can be effected, whereas a protection against corrosion at that side is also obtained, as well as a pleasant engagement surface for a hand.

Preferably the third layer is adhered to the first and the second layer without a separate adhesive, as a result of which the manufacturing of the laminate can be further simplified. The adhesion may for instance take place by applying the third layer in a molten, liquid condition on the first and the second layer or by means of hot laminating. The third layer can also be extruded between the first and the second layer. The third layer can also be adhered to the first and second layer by means of calendering. Other possibilities are for instance mentioned in NL 1009983.

It is preferred that the fourth layer and/or fifth layer is adhered to the first layer without a separate adhesive.

In an easily manufactured embodiment the first and the second layer consist of aluminium for instance having a thickness of 0.05 - 2 mm, preferably 0.1 - 0.4 mm.

Preferably the first and the second layer are equally thick, as a result of which they have a symmetrical position with the third layer with respect to the neutral line.

The aforementioned third, fourth and/or fifth layer may consist of a synthetic material, particularly a thermoplastic synthetic material, possibly including a plasticiser.

The aforementioned third, fourth and/or fifth layer may consist of regenerated or recycled synthetic material, as a result of which costs may be saved on.

As regards the fourth layer it is preferred however that it consists of a polymer, such as PP, PVC or PE, as this layer is subjected the most to weather conditions.

The third and/or fifth layer may also consist of a polymer, such as PP, PVC or PE.

The material for the fourth and/or fifth layer preferably has a density of more than approximately 0.4 (400 kg/m³), a preferred range being 0.8-1.5.

In case the substantially solid synthetic material in question is polypropene, the density may preferably be 0.9. In case of polythene the density may be approximately 0.95. In case of PVC the density may be approximately 1.3, and in case of polyurethane approximately 1.2.

For reasons of ease of manufacturing and recycling it is preferred that all layers of compliant material are manufactured from the same material.

Preferably the third layer has a thickness in the order of magnitude of the thickness of the fourth or the fifth layer.

The fourth and/or fifth layer may have a thickness of 0.1 - 2 mm. Preferably the fourth and the fifth layer have the same thickness, so that when the first and the second layer have the same thickness as well, a perfectly symmetrical structure is obtained.

In a further development the laminate has been deformed into an undulatory pattern, in order to thus provide a buffer for length increase to be able to abut a surface that is not stretched, particularly an undulatory surface, such as of tiles, connecting to a surface that is indeed stretched. After the thus realised plastic deformation the laminate retains its undulated shape.

From a further aspect the invention provides a method for sealing a transition of a stretched surface to a more or less undulated surface on a roof, using a laminate according to the invention.

The invention will be elucidated on the basis of an exemplary embodiment shown in the attached drawings, in which:
Figure 1 shows an exemplary embodiment of a laminate according to the invention, in flat state;
Figure 1 A shows a detailed view of the laminate of figure 1; and
Figure 2 shows the laminate of figure 1 in undulated state.

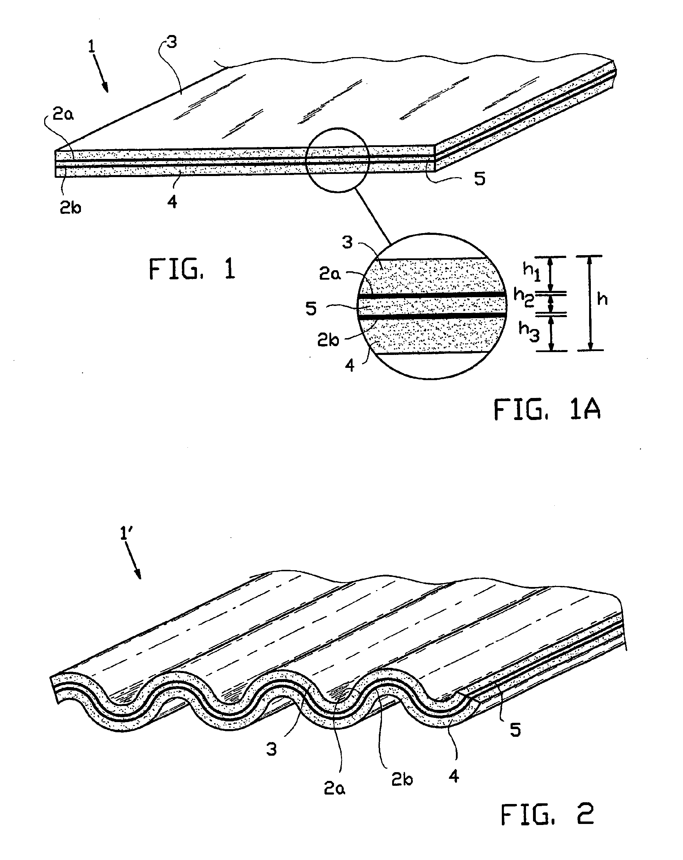

The laminate 1 shown in figure 1 comprises two identical aluminium plates or sheets 2a and 2b, which with their surfaces that face away from each other are spaced apart at for instance 0.8 mm. On these surfaces a layer of compliant PVC is adhered, PVC layers 3 and 4, respectively, in this example having a thickness h1, h3 of 0.5 mm. The PVC layers may also have a different or another thickness, for instance 0.8 mm.

Both aluminium plates 2a, 2b are spaced apart from each other by an intermediate layer 5 of solid synthetic material, for instance PVC, which is also adhered to the surfaces of both aluminium plates 2a, 2b that face each other. The thickness h2 of the layer 5 may in this example also be 0.5 mm.

In this example the material used for the layers 3, 4 and 5 is for instance PVC, having a density of 1,300 kg/m³. Other, substantially solid synthetic materials can be used, such as in particular polypropene, polythene and polyurethane. The density of the -substantially- solid synthetic material is more than 400 kg/m³ preferably 800-1,500 kg/m³.

During use the layer 3 will be able to form the upper layer, and to that end may be treated with a colour and/or UV stabiliser. The intermediate layer 5 and the lower layer 4 may be made of a synthetic material of a lesser quality, as these layers are not or less exposed to flowing water and UV radiation. For the layers 4 and 5 use can for instance be made of a regenerate.

The layers 3, 4 and/or 5 may also be manufactured from another suitable material, such as a bitumen material.

Due to the intermediate layer 5, both aluminium plates 2a, 2b as it were form one unity, yet they are spaced apart from the neutral line of said unity, as a result of which an increased moment of inertia is obtained with little material. The whole has an increased stiffness and substantially independently retains a plastic deformation, despite possible elastic properties in the layers of compliant material.

By forcefully pressing the laminate 1 into shape, the laminate 1 can be provided with the undulated shape, shown with laminate 1' in figure 2.

After installation in a roof, the undulatory laminate offers the possibility of length increase by spreading (for instance by beating) in order to be able to follow a non-stretched shape of the roof surface, for instance in case of tiles, for an as close as possible connection.

The laminate 1 according to the invention after deformation retains its shape to a very large extent, in which the plastically deformed aluminium plates 2a, 2b remain spaced apart from each other and remain deformed and deforming them back can only take place by force. Use of a single expensive metal layer of large thickness can be dispensed with. Moreover in case of such a single metal layer its material situated in the area of the neutral line could remain below the yield point and thus generate elastic reset forces.

## Claims

1. Laminate (1) for use as sheet-shaped sealing material for buildings, particularly on roofs or outer walls, comprising a first and a second plastically deformable layer (2a, 2b) made of a metal and in between them a third layer (5) of a bendable and compliant material spacing the first and second layer (2a, 2b) apart, wherein said third layer (5) is made of substantially solid synthetic material, **characterized in that** the third layer (5) of compliant material being adhered to the first and the second metal layer (2a, 2b), the third layer (5) consisting of thermoplastic synthetic material, the density of the thermoplastic material being more than approximately 400 kg/m³, preferably 800-1500 kg/m³, a fourth layer (3) of a bendable and compliant material being arranged on the outer side of the first layer (2a), and a fifth layer (4) of a bendable and compliant material being arranged on the outer side of the second layer (2b).

2. Laminate (1) according to claim 1, the third layer (5) being adhered to the first and the second layer (2a, 2b) without a separate adhesive.

3. Laminate (1) according to claim 1 or 2, the fourth layer (3) being adhered to the first layer (2a) without a separate adhesive and/or the fifth layer (4) being adhered to the second layer (2b) without a separate adhesive.

4. Laminate (1) according to any one of the preceding claims, the first and the second layer (2a, 2b) consisting of aluminium.

5. Laminate (1) according to any one of the preceding claims, the third layer (5) consisting of regenerated or recycled synthetic material.

6. Laminate (1) according to any one the preceding claims, the fourth layer (3) and/or fifth layer (4) consisting of regenerated or recycled synthetic material.

7. Laminate (1) according to any one of the preceding claims, the fourth and/or fifth layer (3, 4) consisting of a thermoplastic synthetic material.

8. Laminate (1) according to claim 7, the thermoplastic synthetic material of the fourth and/or fifth layer (3, 4) being substantially solid synthetic material.

9. Laminate (1) according to claim 7 or 8, the density of the thermoplastic synthetic material of the fourth and/or fifth layer (3, 4) being more than approximately 400 kg/m³, preferably 800-1500 kg/m³.

10. Laminate (1) according to claim 7, 8 or 9, the third, fourth and/or fifth layer (5, 3, 4) consisting of a polymer, such as PP, PVC or PE.

11. Laminate (1) according to any one of the preceding claims, the first and/or the second layer (2a, 2b) having a thickness of 0.05 - 2 mm, preferably 0.1 - 0.4 mm.

12. Laminate (1) according to any one of the preceding claims the third layer (5) having a thickness in the order of magnitude of the thickness of the fourth or the fifth layer (3, 4).

13. Laminate (1) according to any one of the preceding claims, the fourth layer (3) having a thickness of 0.1 - 2 mm.

14. Laminate (1) according to any one of the preceding claims the fifth layer (3) having a thickness of 0.1 - 2 mm.

15. Laminate (1) according to any one of the preceding claims, the first and the second layer (2a, 2b) having the same thickness.

16. Laminate (1) according to any one of the preceding claims, the fourth and the fifth layer (3, 4) being manufactured of the same material and having the same thickness.

17. Laminate (1) according to any one of the preceding claims, at least its surface being deformed into an undulatory pattern.

18. Method for sealing a transition of a stretched surface to a more or less undulated surface on a roof, using a laminate (1) according to any one of the preceding claims.

## Patentansprüche

1. Laminat (1) für Gebrauch als hautförmiges Dichtungsmaterial für Gebäude, insbesondere auf Dächern, oder auf Außenwänden, umfassend eine erste und zweite plastisch verformbare Schicht (2a,2b) aus einem Metall hergestellt, und dazwischen eine, die erste und zweite Schicht (2a,2b) auf Abstand voneinander haltende, dritte Schicht (5) aus einem biegbaren und nachgebenden Material, wobei die dritte Schicht (5) aus hauptsächlich massiven Kunststoffmaterial hergestellt ist und **dadurch gekennzeichnet, daß** die dritte Schicht (5) aus nachgebendem Material an der ersten und der zweiten Metallschicht (2a,2b) geheftet ist und daß die dritte Schicht aus thermoplastischem Kunstoffmaterial besteht, wobei die Dichtheit des thermoplastischen Materials mehr als ungefähr 400 kg/m³, vorzugsweise 800-1500 kg/m³ ist, wobei eine vierte Schicht (3) aus einem biegbaren und nachgebenden Material an der Außenseite der ersten Schicht (2a) angeordnet ist, und wobei eine fünfte Schicht (4) aus einem biegbaren und nachgebenden Material an der Außenseite der zweiten Schicht (2b) angeordnet ist.

2. Laminat (1) nach Anspruch 1, wobei die dritte Schicht (5) ohne ein separates Haftmittel an der ersten und der zweiten Schicht (2a,2b) geheftet ist.

3. Laminat (1) nach Anspruch 1 oder 2, wobei die vierte Schicht (3) ohne ein separates Haftmittel an der ersten Schicht (2a) geheftet ist und/oder die fünfte Schicht (4) ohne ein separates Haftmittel an der zweiten Schicht (2b) geheftet ist.

4. Laminat (1) nach irgendeinem der vorhergehenden Ansprüche, wobei die erste und die zweite Schicht (2a,2b) aus Aluminium bestehen.

5. Laminat (1) nach irgendeinem der vorhergehenden Ansprüche, wobei die dritte Schicht (5) aus regeneriertem oder wiederverwendetem Kunststoffmaterial besteht.

6. Laminat (1) nach irgendeinem der vorhergehenden Ansprüche, wobei die vierte Schicht (3) und/oder die fünfte Schicht (4) aus regeniertem oder wiederverwendetem Kunststoffmaterial bestehen.

7. Laminat (1) nach irgendeinem der vorhergehenden Ansprüche, wobei die vierte und/oder die fünfte Schicht (3,4) aus einem thermoplastischen Kunststoffmaterial bestehen.

8. Laminat (1) nach Anspruch 7, wobei das thermoplastische Kunststoffmaterial der vierten und/oder der fünften Schicht (3,4) hauptsächlich massives Kunststoffmaterial ist.

9. Laminat (1) nach Anspruch 7 oder 8, wobei die Dichtheit des thermoplastischen Kunststoffmaterials der vierten und/oder der fünften Schicht (3,4) mehr als ungefähr 400kg/m³, vorzugsweise 800-1500 kg/m³, ist.

10. Laminat (1) nach Anspruch 7, 8 oder 9, wobei die dritte, vierte und/oder fünfte Schicht (5,3,4) aus einem Polymer, wie PP, PVC oder PE, bestehen.

11. Laminat (1) nach irgendeinem der vorhergehenden Ansprüche, wobei die erste und/oder die zweite Schicht (2a,2b) eine Dicke von 0,05 - 2 mm, vorzugsweise 0,1 - 0,4 mm, haben.

12. Laminat (1) nach irgendeinem der vorhergehenden Ansprüche, wo bei die dritte Schicht (5) eine Dicke in der Größenordnung der Dicke der vierten oder der fünften Schicht (3,4) hat.

13. Laminat (1) nach irgendeinem der vorhergehenden Ansprüche, wobei die vierte Schicht (3) eine Dicke von 0,1 bis 2 mm hat.

14. Laminat (1) nach irgendeinem der vorhergehenden Ansprüche, wobei die fünfte Schicht (3) eine Dicke von 0,1 bis 2 mm hat.

15. Laminat (1) nach irgendeinem der vorhergehenden Ansprüche, wobei die erste und die zweite Schicht (2a,2b) dieselbe Dicke haben.

16. Laminat (1) nach irgendeinem der vorhergehenden Ansprüche, wobei die vierte und die fünfte Schicht (3,4) aus demselben Material hergestellt sind und dieselbe Dicke haben.

17. Laminat (1) nach irgendeinem der vorhergehenden Ansprüche, wobei zumindest die Oberfäche davon in eine wellenförmige Struktur verformt ist.

18. Verfahren zum Dichten eines Überganges einer gestreckten Oberfläche zu einer mehr oder weniger wellenförmigen Oberfläche auf einem Dach, unter Benutzung eines Laminats (1) nach irgendeinem der vorhergehenden Ansprüche.

## Revendications

1. Stratifié (1) destiné à être utilisé comme un matériau d'étanchéité en forme de feuille pour des bâtiments, en particulier sur des toits ou des murs extérieurs, comprenant une première et une deuxième couche plastiquement déformables (2a, 2b) composées d'un métal et entre elles une troisième couche (5) d'un matériau pliable et flexible séparant les première et deuxième couches (2a, 2b), la troisième couche (5) étant composée d'un matériau synthétique sensiblement solide et
**caractérisé en ce que** la troisième couche (5) de matériau flexible étant collée aux première et deuxième couches de métal (2a, 2b), la troisième couche est constituée d'un matériau synthétique thermoplastique, la densité du matériau thermoplastique étant supérieure à environ 400 kg/m3, de préférence entre 800 et 1 500 kg/m3, une quatrième couche (3) d'un matériau pliable et flexible étant agencée sur le côté extérieur de la première couche (2a), et une cinquième couche (4) d'un matériau pliable et flexible étant agencée sur le côté extérieur de la deuxième couche (2b).

2. Stratifié (1) selon la revendication 1, la troisième couche (5) étant collée sur la première et la deuxième couches (2a, 2b) sans adhésive distinct.

3. Stratifié (1) selon la revendication 1 ou 2, la quatrième couche (3) étant collée à la première couche (2a) sans adhésif distinct, et/ou la cinquième couche (4) étant collée à la deuxième couche (2b) sans adhésif distinct.

4. Stratifié (1) selon l'une quelconque des revendications précédentes, la première et la deuxième couches (2a, 2b) étant constituées d'aluminium.

5. Stratifié (1) selon l'une quelconque des revendications précédentes, la troisième couche (5) étant constituée d'un matériau synthétique régénéré ou recyclé.

6. Stratifié (1) selon l'une quelconque des revendications précédentes, la quatrième couche (3) et/ou la cinquième couche (4) étant constituées d'un matériau synthétique régénéré ou recyclé.

7. Stratifié (1) selon l'une quelconque des revendications précédentes, la quatrième et/ou la cinquième couches (3, 4) étant constituées d'un matériau synthétique thermoplastique.

8. Stratifié (1) selon la revendication 7, le matériau synthétique thermoplastique de la quatrième et/ou la cinquième couches (3, 4) étant sensiblement un matériau synthétique solide.

9. Stratifié (1) selon la revendication 7 ou 8, la densité du matériau synthétique thermoplastique de la quatrième et/ou la cinquième couches (3, 4) étant supérieure à environ 400 kg/m³, de préférence entre 800 et 1 500 kg/m³.

10. Stratifié (1) selon la revendication 7, 8 ou 9, les troisième, quatrième et/ou cinquième couches (5, 3, 4) étant constituées d'un polymère, tel que PP, PVC ou PE.

11. Stratifié (1) selon l'une quelconque des revendications précédentes, les première et/ou deuxième couches (2a, 2b) présentant une épaisseur de 0,05 à 2 mm, de préférence 0,1 à 0,4 mm.

12. Stratifié (1) selon l'une quelconque des revendications précédentes, la troisième couche (5) ayant une épaisseur de l'ordre d'amplitude de l'épaisseur de la quatrième ou cinquième couches (3, 4).

13. Stratifié (1) selon l'une quelconque des revendications précédentes, la quatrième couche (3) présentant une épaisseur de 0,1 à 2 mm.

14. Stratifié (1) selon l'une quelconque des revendications précédentes, la cinquième couche (3) présentant une épaisseur de 0,1 à 2 mm.

15. Stratifié (1) selon l'une quelconque des revendications précédentes, les première et deuxième couches (2a, 2b) présentant la même épaisseur.

16. Stratifié (1) selon l'une quelconque des revendications précédentes, les quatrième et cinquième couches (3, 4) étant fabriquées à partir du même matériau et présentant la même épaisseur.

17. Stratifié (1) selon l'une quelconque des revendications précédentes, au moins sa surface étant déformée dans un motif ondulatoire.

18. Procédé pour étanchéifier une transition d'une surface étirée à une surface plus ou moins ondulée sur un toit, en utilisant un stratifié (1) selon l'une quelconque des revendications précédentes.
